# FASCICULE DE BREVET EUROPEEN

(11) **EP 3 853 040 B1**
(45) Date de publication et mention de la délivrance du brevet: **07.08.2024**
(21) Numéro de dépôt: 19790645.6
(22) Date de dépôt: 13.09.2019
(51) Int. Cl.: B60C 1/00, C08K 5/092, C08K 5/13, C08K 5/3445

(54) **COMPOSITION DE CAOUTCHOUC COMPRENANT UN ÉLASTOMÈRE ÉPOXYDE ET UN COMPOSÉ POLYPHÉNOLIQUE**
KAUTSCHUKZUSAMMENSETZUNG MIT EINEM EPOXIDELASTOMER UND EINER POLYPHENOLISCHEN VERBINDUNG
RUBBER COMPOSITION COMPRISING AN EPOXIDE ELASTOMER AND A POLYPHENOLIC COMPOUND

(30) Priorité: 21.09.2018 FR 1858587
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND CEDEX 9 (FR); GAVARD-LONCHAY, Odile, 63040 CLERMONT-FERRAND CEDEX 9 (FR)
(74) Mandataire: M.F.P. Michelin
(86) Numéro de dépôt international: PCT/FR2019/052141
(87) Numéro de publication internationale: WO 2020/058615

(56) Documents cités:
- WO-A1-2014/095585
- JP-A- 2009 138 018
- JP-B2- 5 494 060
- MYRIAM PIRE ET AL: "Imidazole-accelerated crosslinking of epoxidzed natural rubber by dicarboxylic acids: a mechanistic investigation using NMR spectrospcopy", POLYMER CHEMISTRY, ROYAL SOCIETY OF CHEMISTRY, vol. 3, no. 4, 1 January 2012 (2012-01-01), pages 946 - 953, XP002716750, ISSN: 1759-9954, [retrieved on 20120131], DOI: 10.1039/C2PY00591C

## Description

### Domaine technique de l'invention

La présente invention est relative aux compositions de caoutchouc à base d'élastomères comportant des fonctions époxydes, aux composites comprenant de telles compositions, ainsi qu'aux pneumatiques comprenant de telles compositions ou de tels composites.

### Art antérieur

Les nappes de renforcement des pneumatiques comprennent habituellement un mélange caoutchoutique dans lequel sont noyés des câbles de renforcement, souvent métalliques et recouverts en surface de laiton. L'adhésion entre le mélange caoutchoutique et les câbles métalliques se créé via le phénomène de sulfuration de la surface laitonnée du câble. Cependant, l'interphase créée peut évoluer sous l'effet de l'humidité, de la température ou d'éléments corrosifs.

La fonction d'adhésion impose généralement des formulations spécifiques pour la composition de caoutchouc, notamment la nécessité d'un taux de soufre et d'oxyde de zinc élevé, une faible quantité d'acide stéarique, la présence de sel de cobalt, l'emploi d'accélérateur à phase retard longue.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre.

Des études ont été menées afin de trouver des formulations permettant de s'affranchir du soufre dans les mélanges.

Ainsi, le document WO 2014/095586 décrit un pneumatique comprenant une composition de caoutchouc à base d'au moins un élastomère comprenant des fonctions époxyde, un système de réticulation comprenant un polyacide carboxylique et un imidazole visant à simplifier les compositions par rapport à d'autres systèmes de réticulation et à améliorer les propriétés hystérétiques. Cependant, ce document n'adresse pas le problème d'adhésion de la composition à des câbles.

JP 2009 138018 A et JP 5 494060 B2 divulguent des compositions de caoutchouc pour pneumatique présentant une bonne adhésion à des câbles en acier, les-dites compositions comprenant un élastomère diénique et de la catéchine.

Poursuivant ses recherches, la demanderesse a découvert une composition de caoutchouc à base d'au moins un élastomère comprenant des fonctions époxyde, au moins une charge renforçante, un système de réticulation comprenant un polyacide carboxylique, un imidazole et au moins un composé polyphénolique spécifique présentant des caractéristiques d'adhésions à un élément de renfort particulièrement intéressantes, en particulier pour la constitution de composites destinés à des pneumatiques. La composition selon l'invention permet ainsi d'obtenir une excellente adhésion aux éléments de renfort ne nécessitant ni vulcanisation ou sulfuration, ni présence de sels de cobalt, que ces éléments de renfort soient revêtus d'un alliage spécifique ou non.

### Description détaillée de l'invention

L'invention concerne au moins une composition de caoutchouc à base d'au moins un élastomère comprenant des fonctions époxyde, au moins une charge renforçante, un système de réticulation comprenant un polyacide carboxylique de formule générale (I) 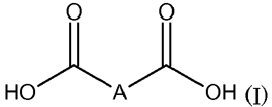 dans laquelle A représente une liaison covalente ou un groupement hydrocarboné comportant au moins 1 atome de carbone, éventuellement substitué et éventuellement interrompu par un ou plusieurs hétéroatomes et un imidazole de formule générale (II) 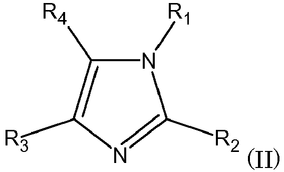 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné, ou encore R₃ et R₄ forment ensemble, avec les atomes de carbone du cycle imidazole auxquels ils se rattachent, un cycle,
et au moins un composé polyphénolique de formule générale (III) 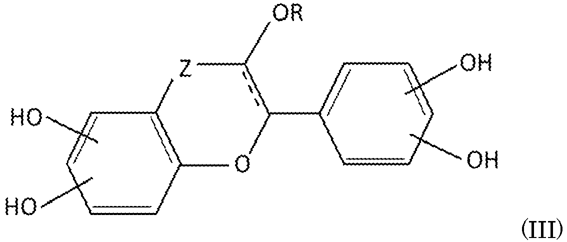 dans laquelle :
- R représente un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle, ces radicaux étant éventuellement substitués ;
- Z représente un radical divalent CH₂ ou C=O.

### Définitions

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Élastomère comprenant des fonctions époxyde

Par élastomère ou caoutchouc (les deux termes étant de manière connue synonymes et interchangeables) comprenant des fonctions époxydes, on entend tout type d'élastomère au sens connu de l'homme de l'art, qu'il s'agisse d'un homopolymère ou d'un copolymère à bloc, statistique ou autre, ayant des propriétés élastomériques, fonctionnalisé époxyde (ou époxydé), c'est-à-dire porteur de groupes fonctionnels époxydes. On utilise indistinctement les expressions « élastomère comprenant des fonctions époxydes » ou « élastomère époxydé ».

Les élastomères époxydés sont, de manière connue, solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

La température de transition vitreuse Tg des élastomères décrits dans le présent texte est mesurée de manière connue par DSC (Differential Scanning Calorimetry), par exemple et sauf indications différentes spécifiées, selon la norme ASTM D3418 de 1999.

La composition de caoutchouc conforme à l'invention peut contenir un seul élastomère époxydé ou un mélange de plusieurs élastomères époxydés (qu'on notera alors au singulier comme étant « l'élastomère époxydé » pour représenter la somme des élastomères époxydés de la composition), l'élastomère comprenant des fonctions époxydes pouvant être utilisé en association avec tout type d'élastomère non époxydé, par exemple diénique, voire avec des élastomères autres que des élastomères diéniques.

L'élastomère époxydé est majoritaire dans la composition de caoutchouc selon l'invention, c'est-à-dire qu'il est soit le seul élastomère, soit il est celui qui représente la plus grande masse, parmi les élastomères de la composition.

Selon un mode préférentiel de réalisation de l'invention, la composition de caoutchouc comprend de 30 à 100 pce, en particulier de 50 à 100 pce, de préférence 70 à 100 pce, d'élastomère époxydé majoritaire en coupage avec 0 à 70 pce, en particulier de 0 à 50 pce et de préférence 0 à 30 pce, d'un ou plusieurs autres élastomères, minoritaires, non époxydés.

Selon un autre mode préférentiel de réalisation de l'invention, la composition comporte pour la totalité des 100 pce d'élastomère, un ou plusieurs élastomères époxydés.

Le taux (% molaire) d'époxydation des élastomères époxydés peut varier dans une large part selon les modes de réalisation particuliers de l'invention, de préférence dans un domaine de 0,1% à 80%, préférentiellement dans un domaine de 0,1% à 50%, plus préférentiellement dans un domaine de 0,3% à 50%. Quand le taux d'époxydation est inférieur à 0,1%, l'effet technique visé risque d'être insuffisant tandis qu'au-delà de 80%, les propriétés intrinsèques du polymère sont dégradées. Pour toutes ces raisons, le taux de fonctionnalisation, notamment d'époxydation, est plus préférentiellement compris dans un domaine de 0,3% à 30%, préférentiellement compris dans un domaine de 2,5% à 30%.

L'élastomère époxydé peut être choisi dans le groupe constitué par les élastomères diéniques époxydés, les élastomères oléfiniques époxydés et les mélanges de ces derniers. Préférentiellement, l'élastomère époxydé est choisi parmi les élastomères oléfiniques époxydés et les mélanges de ces derniers. Selon une autre variante préférentielle de l'invention, l'élastomère époxydé est choisi parmi les élastomères diéniques époxydés et les mélanges de ces derniers.

Par élastomère du type diénique époxydé, on rappelle que doit être entendu un élastomère qui est issu au moins en partie (i.e. un homopolymère ou un copolymère) de monomères diènes (monomères porteurs de deux doubles liaisons carbone-carbone, conjuguées ou non), ce polymère étant fonctionnalisé, c'est-à-dire qu'il est porteur de groupes fonctionnels époxydes.

Une première caractéristique des élastomères diéniques époxydés, est donc d'être des élastomères diéniques. Ces élastomères diéniques, par définition non thermoplastiques dans la présente demande, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et 70°C.

Une deuxième caractéristique essentielle de l'élastomère diénique époxydé utile aux besoins de l'invention, est qu'il est fonctionnalisé, porteur de groupes fonctionnels époxydes.

Les fonctions époxydes présentes dans l'élastomère diénique sont obtenues par copolymérisation ou par modification post-polymérisation, et seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

Les élastomères diéniques époxydés peuvent par exemple être obtenus de manière connue par époxydation de l'élastomère diénique non époxydé équivalent, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82. Les fonctions époxydes sont alors dans la chaîne de polymère. On peut citer notamment les caoutchoucs naturels époxydés (en abrégé "ENR") ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

Des élastomères diéniques porteurs de groupes époxydes ont été décrits par exemple dans US 2003/120007 ou EP 0763564, US 6903165 ou EP 1403287.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les élastomères diéniques époxydés peuvent également présenter des fonctions époxydes pendantes. Dans ce cas, ils peuvent être obtenus soit par modification post-polymérisation (voir par exemple J. Appl. Polym. Sci. 1999, 73, 1733), ou par copolymérisation radicalaire des monomères diéniques avec des monomères porteurs de fonctions époxydes, notamment les esters de l'acide méthacrylique comportant des fonctions époxydes, comme par exemple le méthacrylate de glycidyle (cette polymérisation radicalaire, notamment en masse, en solution ou en milieu dispersé - notamment dispersion, émulsion ou suspension - est bien connue de l'homme du métier de la synthèse de polymères, citons par exemple la référence suivante : Macromolécules 1998, 31, 2822) ou par l'utilisation d'oxydes de nitrile porteurs de fonctions époxydes. Par exemple, le document US20110098404 décrit la copolymérisation en émulsion du 1,3-butadiène, du styrène et du méthacrylate de glycidyle.

Par élastomère du type oléfinique époxydé, on rappelle que doit être entendu un élastomère fonctionnalisé époxyde, c'est-à-dire qu'il est porteur de groupes fonctionnels époxydes, et dont la chaine élastomérique est une chaine carbonée comportant majoritairement des unités monomériques oléfine notés O.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique époxydé est un élastomère éthylénique époxydé, ce qui permet d'améliorer le compromis entre les performances de rigidité et d'hystérèse dans les compositions de caoutchouc selon l'invention.

Le taux molaire de O est supérieur à 50%. Plus précisément, le taux molaire de O est compris entre 50 et 95%, préférentiellement entre 65 et 85%. L'élastomère oléfinique au sens de la présente invention est donc un copolymère comportant également de 5 à 50% molaire de motifs non oléfiniques, c'est-à-dire différents de O.

Ces motifs non oléfiniques sont constitués en partie ou en totalité par des motifs porteurs des groupes fonctionnels époxydes, notés R, nécessaires aux besoins de l'invention.

Le taux (% molaire) de motif R des élastomères oléfiniques époxydés précédemment décrits peut varier dans une large part selon les modes de réalisation particuliers de l'invention, de préférence dans un domaine de 0,1% à 50%, préférentiellement dans un domaine de 0,3% à 50%, plus préférentiellement dans un domaine de 0,3% à 30%, mieux, dans un domaine de 0,3 à 30%, et très préférentiellement dans un domaine de 2,5 à 30%. Quand le taux de motifs R est inférieur à 0,1%, l'effet technique visé risque d'être insuffisant tandis qu'au-delà de 50%, l'élastomère ne serait plus majoritairement oléfinique.

Dans le cas où les motifs non oléfiniques ne sont pas intégralement des motifs R, d'autres motifs, notés A' sont présents dans la chaine carbonée de façon à ce que le taux molaire total représenté par les monomères O, R et A' soit égal à 100%. Les monomères non oléfiniques utiles à la préparation des élastomères oléfiniques époxydés peuvent être choisis parmi les monomères non oléfiniques ne conduisant pas à des insaturations et les monomères qui, une fois polymérisés, conduisent à des insaturations portées par la chaine élastomère (autres que des monomères diéniques).

Les monomères non oléfiniques ne conduisant pas à des insaturations sont essentiellement des monomères vinyliques et acryliques/méthacryliques. Par exemple, de tels monomères peuvent être choisis parmi le styrène, le vinyle acétate, l'alcool vinylique, l'acrylonitrile, l'acrylate de méthyle, le méthacrylate de méthyle, ces monomères étant éventuellement substitués par des groupes alkyles, aryles ou d'autres groupes fonctionnalisés.

Par exemple également, les monomères non diéniques utiles à la préparation des élastomères oléfiniques porteurs d'insaturations par copolymérisation sont tous ceux connus de l'homme de l'art pour former des élastomères insaturés, tels que par exemple le méthacrylate de dicyclopentadiényloxyéthyle.

Une caractéristique essentielle de l'élastomère oléfinique époxydé utile aux besoins de l'invention, est qu'il est fonctionnalisé, porteur de groupes fonctionnels époxydes.

Des élastomères oléfiniques époxydés et leurs procédés d'obtention sont bien connus de l'homme du métier. Des élastomères oléfiniques porteurs de groupes époxydes ont été décrits par exemple dans les documents EP 0247580 ou US 5576080. La société Arkema propose dans le commerce, des polyéthylènes époxydés sous les dénominations commerciales « Lotader AX8840» et « Lotader AX8900 ».

La fonction époxyde peut être portée directement par le squelette carboné, et est alors principalement obtenue par époxydation de doubles liaisons carbone-carbone initialement présentes après copolymérisation. Cette époxydation de polymères insaturés est bien connue de l'homme du métier, et peut se faire par exemple par des procédés à base de chlorohydrine ou de bromohydrine, des procédés d'oxydation directe ou des procédés à base de peroxydes d'hydrogène, d'alkyl hydropéroxydes ou de peracides (tels que l'acide peracétique ou acide performique).

La fonction époxyde peut également être pendante et est alors soit déjà présente dans un monomère intervenant dans la copolymérisation avec l'oléfine (ce monomère peut être, par exemple, le méthacrylate de glycidyle, l'allylglycidyléther ou le vinylglycidyléther), soit obtenue par la modification post-copolymérisation d'une fonction pendante.

Les élastomères oléfiniques époxydés présentent une Tg dans la très grande majorité des cas qui est négative (c'est-à-dire inférieure à 0°C).

Les élastomères oléfiniques époxydés présentent une masse molaire moyenne en nombre (Mn) d'au moins 10 000 g/mol, préférentiellement d'au moins 15 000 g/mol et d'au plus 1 500 000 g/mol. L'indice de polydispersité Ip, égal à Mw/Mn (Mw étant la masse molaire moyenne en poids), est compris entre 1,05 et 11,00.

De préférence, et en résumé, l'élastomère oléfinique comprenant des fonctions époxydes est donc un copolymère possédant au moins 50% (en moles) d'unités monomériques oléfine, et avec un nombre d'unités monomériques différentes supérieur ou égal à 2, préférentiellement de 2 à 5, et plus préférentiellement de 2 ou 3. Ce copolymère pourra être obtenu par copolymérisation ou par modification post-polymérisation d'un élastomère. Les fonctions époxydes présentes dans le copolymère oléfinique, obtenu par copolymérisation ou par modification post-polymérisation, seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

### Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce). Ce mode de réalisation préférentiel est particulièrement préféré lorsque l'élastomère majoritaire de la composition est un caoutchouc isoprénique époxydé, plus particulièrement du caoutchouc naturel époxydé.

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce). Ce mode de réalisation préférentiel est également particulièrement préféré lorsque l'élastomère majoritaire de la composition est un caoutchouc isoprénique époxydé, plus particulièrement du caoutchouc naturel époxydé.

De préférence, la composition de caoutchouc selon l'invention est dépourvue d'agent de couplage (ou agent de liaison). Par composition dépourvue d'un composé, on comprend que la composition ne comprend pas de ce composé introduit volontairement dans la composition et que ce composé, s'il est présent, l'est sous forme de traces liées par exemple au procédé de fabrication de la composition ou des éléments la composant. Par exemple, la composition dépourvue de ce composé comprend une quantité inférieure ou égale à 0,2 pce, de préférence inférieure ou égale à 0,1 pce et de préférence inférieure ou égale à 0,05 pce de ce composé.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Système de réticulation

A l'élastomère époxydé et à la charge renforçante précédemment décrits est associé un système de réticulation, apte à réticuler ou durcir la composition de caoutchouc selon l'invention. Ce système de réticulation comprend un polyacide carboxylique de formule générale (I) et un imidazole de formule générale (II).

### - Polyacide

Le polyacide utile pour les besoins de l'invention est un polyacide carboxylique de formule générale (I) 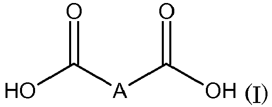 dans laquelle A représente une liaison covalente ou un groupement hydrocarboné comportant au moins 1 atome de carbone, éventuellement substitué et éventuellement interrompu par un ou plusieurs hétéroatomes.

De préférence dans le polyacide de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le polyacide est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone. Dans un arrangement particulier, la composition de caoutchouc selon l'invention comprend entre 0,9 et 30 pce d'au moins un polyacide dont le groupement A comporte entre 10 et 40 atomes de carbone et entre 5 et 30 pce d'au moins un polyacide dont le groupement A comporte entre 100 et 300 atomes de carbone.

Préférentiellement dans le polyacide de formule générale (I), A peut être un groupement divalent de type aliphatique, ou aromatique ou un groupement comportant au moins une partie aliphatique et une partie aromatique. De préférence, A peut être un groupement divalent de type aliphatique, ou un groupement comportant au moins une partie aliphatique et une partie aromatique. Alternativement, et de préférence également, A peut être un groupement divalent de type aliphatique saturé ou insaturé, par exemple un groupement alkylène.

Le groupement A du polyacide de formule générale (I) peut être interrompu par au moins un hétéroatome choisi parmi l'oxygène, l'azote et le soufre, de préférence l'oxygène.

Egalement, le groupement A du polyacide de formule générale (I) peut être substitué par au moins un radical choisi parmi les radicaux alkyle, cycloalkylalkyle, aryle, aralkyle, hydroxyle, alkoxy, amino et carbonyle.

Le polyacide de formule générale (I) peut comporter plus de deux fonctions acides carboxyliques, dans ce cas, le groupement A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

Selon un mode préférentiel, le radical A ne comporte pas d'autre fonction acide carboxylique, le polyacide est donc un diacide.

Le taux de polyacide est préférentiellement compris dans un domaine allant de 0,2 à 100 pce, de préférence de 0,2 à 50 pce, plus préférentiellement de 0,4 à 30 pce, et plus préférentiellement encore de 0,9 à 25 pce. En dessous de 0,2 pce de polyacide, l'effet de la réticulation n'est pas sensible tandis qu'au-delà de 100 pce de polyacide, le polyacide, agent de réticulation, devient majoritaire en poids par rapport à la matrice élastomérique.

Les polyacides utiles pour les besoin de l'invention sont soit disponibles dans le commerce, soit facilement préparés par l'homme de l'art selon des techniques bien connues telles que les voies chimiques décrites par exemple dans le document US 7534917 ainsi que dans les références que ce document cite, ou les voies biologiques, telles que la fermentation décrite dans le document US 3843466.

Par exemple, à titre de polyacides disponibles dans le commerce et utiles aux besoins de l'invention, on peut citer : l'acide oxalique, l'acide succinique, l'acide adipique, l'acide sébacique, l'acide dodécanedioïque, l'acide terephthalique ou encore des polyacides tels que l'acide trimésique ou l'acide 3,4-bis(carboxyméthyl)cyclopentanecarboxylique.

### - Imidazole

L'imidazole utile au système de réticulation selon l'invention est un imidazole de formule générale (II) 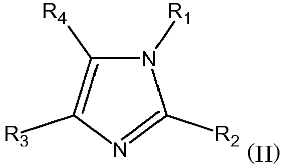 dans laquelle,
- R₁ représente un atome d'hydrogène ou un groupe hydrocarboné, éventuellement interrompu par un ou plusieurs hétéroatomes et/ou substitué,
- R₂ représente un groupe hydrocarboné,
- R₃ et R₄ représentent indépendamment l'un de l'autre, un atome d'hydrogène ou un groupe hydrocarboné, éventuellement interrompu par un ou plusieurs hétéroatomes et/ou substitué,
- ou encore R₃ et R₄ forment ensemble avec les atomes de carbone du cycle imidazole auxquels ils se rattachent, un cycle éventuellement interrompu par un ou plusieurs hétéroatomes et/ou substitué.

Par l'expression « éventuellement interrompu par un ou plusieurs hétéroatomes et/ou substitué », on entend que les groupes R₁, R₃ et R₄ peuvent, indépendamment et lorsqu'ils représentent un groupe hydrocarboné, être interrompus par un hétéroatome (c'est-à-dire en d'autres termes qu'un hétéroatome est intercalé dans la chaine hydrocarbonée), préférentiellement choisi parmi l'azote, l'oxygène et le soufre, et/ou substitués par un groupe fonctionnel. Par groupe fonctionnel, on entend un groupe comprenant un hétéroatome, préférentiellement choisi parmi les groupes amino, alkylamine, alcoxyle et hydroxyle, préférentiellement choisi parmi les groupes hydroxyle et amino.

De préférence, l'imidazole de formule générale (II) possède des groupements tels que :
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone, éventuellement substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone, éventuellement substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, R₁ représente un groupement choisis parmi les groupements alkyles ayant de 2 à 12 atomes de carbone, ou aralkyles ayant de 7 à 13 atomes de carbone, éventuellement substitués. Plus préférentiellement, R₁ représente un groupement aralkyle ayant de 7 à 13 atomes de carbone éventuellement substitué et R₂ représente un groupement alkyle ayant de 1 à 12 atomes de carbone. Encore plus préférentiellement, R₁ représente un groupement aralkyle ayant de 7 à 9 atomes de carbone éventuellement substitué et R₂ représente un groupement alkyle ayant de 1 à 4 atomes de carbone.

De préférence, R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone, éventuellement substitués. Alternativement et préférentiellement également, R₃ et R₄ représentent forment avec les atomes de carbone du cycle imidazole auxquels ils se rattachent, un cycle phényle, cyclohexene, ou cyclopentene.

Pour un bon fonctionnement de l'invention, le taux d'imidazole est préférentiellement compris dans un domaine allant de 0,01 à 4 équivalents molaires, et de préférence de 0,01 à 3 équivalents molaires, par rapport aux fonctions acides carboxyliques présentes sur le polyacide carboxylique de formule générale (I). En dessous de 0,01 équivalents molaires, on n'observe pas d'effet du coagent imidazole par rapport à la situation où le polyacide est utilisé seul tandis qu'au-dessus d'une valeur de 4 équivalents molaires, on n'observe pas de bénéfice supplémentaire par rapport à des taux plus faibles. Ainsi, le taux d'imidazole est plus préférentiellement compris dans un domaine allant de 0,01 à 2,5 équivalents molaires, et de préférence de 0,01 à 2 équivalents molaires, et de manière encore plus préférentielle de 0,01 à 1,5 équivalents molaires et de manière préférée de 0,5 à 1,5 équivalents molaires par rapport aux fonctions acides carboxyliques présentes sur le polyacide carboxylique de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

A l'évidence, et conformément à la définition de l'expression « à base de » pour la présente invention, une composition à base du polyacide de formule générale (I) et de l'imidazole de formule générale (II) présentés ci-dessus pourrait être une composition dans laquelle ledit polyacide et ledit imidazole auraient préalablement réagi ensemble pour former un sel entre une ou plusieurs fonctions acides du polyacide et respectivement un ou plusieurs noyaux imidazoles.

### Composé polyphénolique

La composition selon l'invention comprend au moins un composé polyphénolique, ce composé étant un composé aromatique de formule générale (III) 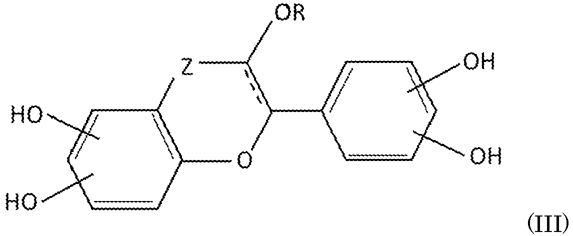 dans laquelle :
- R représente un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle, ces radicaux étant éventuellement substitués ;
- Z représente un radical divalent CH₂ ou C=O.

Dans la présente description, l'expression « composé polyphénolique » désigne le composé aromatique de formule générale (III).

Par groupe carboxyle, ou fonction acide carboxylique, on entend un groupe de formule -COOH dans lequel l'atome de carbone est lié par une double liaison à un atome d'oxygène et par une liaison simple à un groupe hydroxyle -OH.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe amino, on entend un groupe de formule -NH₂.

Par radical aminoalkyle, on entend un radical de formule -CₙH₂ₙ-NH₂, dans lequel n est un entier, préférentiellement compris entre 1 et 15, préférentiellement entre 1 et 10, très préférentiellement entre 1 et 5, et de manière préférée entre 1 et 3.

Par l'expression « ces radicaux étant éventuellement substitués », on entend qu'ils peuvent préférentiellement être substitués par au moins un radical choisi parmi les radicaux alkyle, cycloalkylalkyle, aryle, aralkyle, hydroxyle, alkoxy, amino et carbonyle.

Préférentiellement, R représente un atome d'hydrogène, ou un groupe choisi parmi les groupes carboxyle, hydrogénocarbonyle et hydroxyle, ou un radical choisi parmi les radicaux alkyle et arylcarbonyle.

Dans un arrangement préféré, R représente un atome d'hydrogène.

Dans un autre arrangement préféré, R représente un radical arylcarbonyle substitué par au moins deux groupes hydroxyles vicinaux.

Quel que soit le mode de réalisation préféré, la masse molaire du composé polyphénolique de formule générale (III) est préférentiellement inférieure à 1000 g/mol, de manière préférée inférieure à 800 g/mol, préférentiellement inférieure à 600 g/mol.

La composition de caoutchouc selon l'invention présente des caractéristiques d'adhésion à un composant métallique particulièrement intéressantes, notamment grâce à la présence du composé polyphénolique de formule générale (III), en particulier pour la constitution de composites, et tout particulièrement de composites à destination de pneumatiques.

La composition de caoutchouc selon l'invention comprend préférentiellement de 0,1 à 25 pce de composé polyphénolique, préférentiellement de 2 à 15 pce. En deçà de 0,1 pce, le composé polyphénolique n'a pas d'effet notable sur les propriétés d'adhésion de la composition de caoutchouc selon l'invention. Au-delà de 25 pce, on n'observe plus de gain significatif.

### Additifs divers

Les compositions de caoutchouc conformes à l'invention peuvent comporter également tout ou partie des additifs usuels, connus de l'homme de l'art et habituellement utilisés dans les compositions de caoutchouc pour pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

Ces compositions peuvent également contenir des agents d'aide à la mise en oeuvre susceptibles, de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (par exemple l'octyltriéthoxysilane, ou silane octéo), des polyols, des polyéthers, des amines primaires, secondaires ou tertiaires, des polyorganosiloxanes hydroxylés ou hydrolysables.

De manière préférentielle, les compositions de caoutchouc de l'invention sont dépourvues de système de réticulation autre que celui décrit précédemment, et qui comporte au moins un polyacide et au moins un imidazole. Dit autrement, le système de réticulation à base d'au moins un polyacide et au moins un imidazole est préférentiellement le seul système de réticulation dans la composition de caoutchouc de l'invention. De préférence, les compositions de caoutchouc de l'invention sont dépourvues de système de vulcanisation, ou en contiennent moins de 1 pce, de préférence moins de 0,5 pce et plus préférentiellement moins de 0,2 pce. Ainsi, la composition de caoutchouc selon l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce.

De même la composition est préférentiellement dépourvue de sels de cobalt, tels qu'ils sont connus de l'homme du métier, et dont l'effet connu de l'Homme du métier est une amélioration de l'adhésion, ou en contient moins de 1 pce, de préférence moins de 0,5 pce, plus préférentiellement moins de 0,2 pce et très préférentiellement moins de 0,1 pce.

Ainsi, de manière surprenante, une très bonne adhésion de la composition selon l'invention sur des câbles de renforcement est obtenue sans qu'il soit besoin d'utiliser de sels de cobalt.

### Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, éventuellement tout ou partie du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La première phase est réalisée à haute température, jusqu'à une température maximale comprise entre 110°C et 190°C, de préférence entre 130°C et 180°C, pendant une durée généralement comprise entre 2 et 10 minutes.
- une seconde phase de travail mécanique, qui est réalisée dans un mélangeur externe tel qu'un mélangeur à cylindres, après refroidissement du mélange obtenu au cours de la première phase jusqu'à une plus basse température, typiquement inférieure à 110°C, par exemple entre 40°C et 100°C. On incorpore alors le système de réticulation si cela n'a pas été fait lors de la première phase, et le tout est alors mélangé pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée sous la forme d'un semi-fini (ou profilé) de caoutchouc utilisé pour la fabrication d'un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

### Composite

L'invention concerne également un composite à base au moins d'un élément de renfort et d'une composition de caoutchouc selon l'invention.

Par l'expression composite "à base au moins d'un élément de renfort et d'une composition selon l'invention", il faut entendre un composite comprenant l'élément de renfort et ladite composition, la composition ayant pu réagir avec la surface de l'élément de renfort lors des différentes phases de fabrication du composite, en particulier au cours de la réticulation de la composition ou au cours de la confection du composite avant réticulation de la composition.

Ledit élément de renfort est un élément filaire. Il peut être tout ou partie métallique ou textile.

En particulier, ledit élément de renfort peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans un arrangement particulier, ledit élément de renfort comprend une surface métallique.

La surface métallique de l'élément de renfort constitue au moins une partie, et préférentiellement la totalité de la surface dudit élément et est destinée à entrer directement au contact de la composition selon l'invention. De préférence, l'élément de renfort est métallique, c'est-à-dire constitué d'un matériau métallique.

La composition selon l'invention enrobe au moins une partie de l'élément de renfort, préférentiellement la totalité dudit élément.

Selon une première variante de l'invention, la surface métallique de l'élément de renfort est faite d'un matériau différent du restant du composant. Autrement dit, l'élément de renfort est fait d'un matériau qui est au moins en partie, préférentiellement totalement, recouvert par une couche métallique qui constitue la surface métallique. Le matériau au moins en partie, préférentiellement totalement, recouvert par la surface métallique est de nature métallique ou non métallique, de préférence métallique.

Selon une deuxième variante de l'invention, le composant est fait d'un même matériau, auquel cas le composant est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou l'acier, et de manière très préférée le laiton.

Dans la présente demande, l'expression « le métal de la surface métallique est le métal ci-après désigné » revient à dire que la surface métallique est en métal ci-après désigné. Par exemple l'expression « le métal de la surface métallique est le laiton » écrite plus haut signifie que la surface métallique est en laiton. Certains métaux étant sujets à l'oxydation au contact de l'air ambiant, le métal peut être en partie oxydé.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Selon un mode de réalisation préféré, le composite est un produit renforcé qui comprend plusieurs éléments de renforcement tels que définis ci-dessus et une gomme de calandrage dans laquelle sont noyés les éléments de renforcement, la gomme de calandrage consistant en la composition de caoutchouc selon l'invention. Selon ce mode de réalisation, les éléments de renforcement sont agencés généralement côte à côte selon une direction principale. Pour une application envisagée dans le pneumatique, le composite peut donc constituer une armature de renforcement pour pneumatique.

Le composite conforme à l'invention peut être à l'état cru (avant réticulation de la composition de caoutchouc) ou à l'état cuit (après réticulation de la composition de caoutchouc). Le composite est cuit après mise en contact du ou des éléments de renfort avec la composition de caoutchouc selon l'invention.

Le composite peut être fabriqué par un procédé qui comprend les étapes suivantes :
- Réaliser deux couches de la composition selon l'invention,
- Prendre le ou les éléments de renfort en sandwich dans les deux couches en le(s) déposant entre les deux couches,
- Le cas échéant cuire le composite.

Alternativement, le composite peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un pneumatique, la cuisson du composite a lieu généralement lors de la cuisson de l'enveloppe du pneumatique.

### Pneumatique

Le pneumatique, autre objet de l'invention, a pour caractéristique essentielle de comprendre la composition ou le composite conforme à l'invention. Le pneumatique peut être à l'état cru (avant réticulation de la composition de caoutchouc) ou à l'état cuit (après réticulation de la composition de caoutchouc). Généralement, au cours de la fabrication du pneumatique, la composition ou le composite est déposé à l'état cru (c'est-à-dire avant réticulation de la composition de caoutchouc) dans la structure du pneumatique avant l'étape de cuisson du pneumatique.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

Aussi, l'invention concerne également un pneumatique comprenant une couche interne comportant une composition ou un composite selon la présente invention. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

En plus des objets précédemment décrits, l'invention concerne au moins l'un des objets détaillés aux points suivants :
1. Une composition de caoutchouc à base d'au moins un élastomère comprenant des fonctions époxyde, au moins une charge renforçante, un système de réticulation comprenant un polyacide carboxylique de formule générale (I) 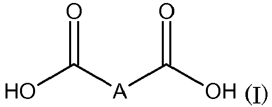 dans laquelle A représente une liaison covalente ou un groupement hydrocarboné comportant au moins 1 atome de carbone, éventuellement substitué et éventuellement interrompu par un ou plusieurs hétéroatomes et un imidazole de formule générale (II) 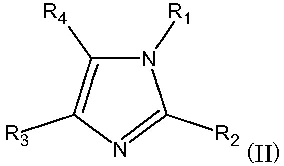 dans laquelle,
   - R₁ représente un atome d'hydrogène ou un groupe hydrocarboné, éventuellement interrompu par un ou plusieurs hétéroatomes et/ou substitué,
   - R₂ représente un groupe hydrocarboné,
   - R₃ et R₄ représentent indépendamment l'un de l'autre, un atome d'hydrogène ou un groupe hydrocarboné, éventuellement interrompu par un ou plusieurs hétéroatomes et/ou substitué,
   - ou encore R₃ et R₄ forment ensemble avec les atomes de carbone du cycle imidazole auxquels ils se rattachent, un cycle éventuellement interrompu par un ou plusieurs hétéroatomes et/ou substitué.
   et au moins un composé polyphénolique de formule générale (III) 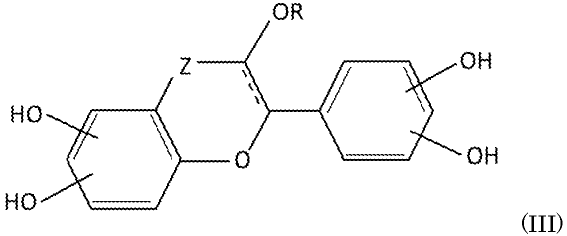 dans laquelle :
   - R représente un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle, ces radicaux étant éventuellement substitués ;
   - Z représente un radical divalent CH₂ ou C=O.
2. Une composition selon le point précédent dans laquelle R représente un atome d'hydrogène, ou un groupe choisi parmi les groupes carboxyle, hydrogénocarbonyle et hydroxyle, ou un radical choisi parmi les radicaux alkyle et arylcarbonyle.
3. Une composition selon l'un quelconque des points précédents dans laquelle R représente un atome d'hydrogène.
4. Une composition selon l'un quelconque des points 1 à 2 dans laquelle R représente un radical arylcarbonyle substitué par au moins deux groupes hydroxyles vicinaux.
5. Une composition selon l'un quelconque des points précédents dans laquelle la masse molaire dudit composé polyphénolique est inférieure à 1000 g/mol.
6. Une composition selon l'un quelconque des points précédents dans laquelle le taux de composé polyphénolique est compris entre 0,1 et 25 pce.
7. Une composition selon l'un quelconque des points précédents dans laquelle ladite composition est dépourvue de soufre moléculaire ou en contient moins de 1 pce.
8. Une composition selon l'un quelconque des points précédents dans laquelle ladite composition est dépourvue de sels de cobalt ou en contient moins de 1 pce.
9. Une composition de caoutchouc selon l'un quelconque des points précédents dans laquelle A représente une liaison covalente ou un groupement divalent hydrocarboné comportant de 1 à 1800 atomes de carbone, de préférence de 2 à 300 atomes de carbone.
10. Une composition de caoutchouc selon l'un quelconque des points précédents dans laquelle A est un groupement divalent de type aliphatique, ou aromatique ou un groupement comportant au moins une partie aliphatique et une partie aromatique.
11. Une composition de caoutchouc selon l'un quelconque des points précédents dans laquelle A est un groupement divalent de type aliphatique saturé ou insaturé.
12. Une composition de caoutchouc selon l'un quelconque des points précédents dans laquelle A est un groupement alkylène.
13. Une composition de caoutchouc selon l'un quelconque des points précédents dans laquelle A est interrompu par au moins un hétéroatome choisi parmi l'oxygène, l'azote et le soufre, de préférence l'oxygène.
14. Une composition de caoutchouc selon l'un quelconque des points précédents dans laquelle A est substitué par au moins un radical choisi parmi les radicaux alkyle, cycloalkylalkyle, aryle, aralkyle, hydroxyle, alkoxy, amino et carbonyle.
15. Une composition selon l'un quelconque des points précédents, dans laquelle A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.
16. Une composition selon l'un quelconque des points précédents, dans laquelle le radical A ne comporte pas d'autre fonction acide carboxylique.
17. Une composition de caoutchouc selon l'un quelconque des points précédents, dans laquelle le taux de poly-acide est compris dans un domaine allant de 0,2 à 100 pce, de préférence de 0,2 à 50 pce.
18. Une composition de caoutchouc selon l'un quelconque des points précédents, dans laquelle :
   - R1 représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone, éventuellement substitué,
   - R2 représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone,
   - R3 et R4 représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone, éventuellement substitués, ou encore R3 et R4 forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.
19. Une composition de caoutchouc selon l'un quelconque des points précédents, dans laquelle R1 représente un groupement choisi parmi les groupements alkyles ayant de 2 à 12 atomes de carbone, ou aralkyles ayant de 7 à 13 atomes de carbone; groupements qui peuvent éventuellement être substitués.
20. Une composition de caoutchouc selon l'un quelconque des points précédents, dans laquelle R1 représente un groupement aralkyle ayant de 7 à 13 atomes de carbone éventuellement substitué et R2 représente un groupement alkyle ayant de 1 à 12 atomes de carbone.
21. Une composition de caoutchouc selon l'un quelconque des points précédents, dans laquelle R3 et R4 représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.
22. Une composition de caoutchouc selon l'un quelconque des points précédents dans laquelle la charge renforçante comporte du noir de carbone, de la silice ou un mélange de noir de carbone et de silice.
23. Une composition de caoutchouc selon l'un quelconque des points précédents dans laquelle le taux de charge renforçante est comprise entre 20 et 200 pce.
24. Un composite à base au moins d'un élément de renfort et d'une composition selon l'un quelconque des points précédents.
25. Un composite selon le point 24 dans lequel l'élément de renfort comprend une surface métallique.
26. Un composite selon l'un quelconque des points 24 à 25 dans lequel la surface métallique dudit élément de renfort comprend un métal choisi dans le groupe constitué par le fer, le cuivre, le zinc, l'étain, l'aluminium, le cobalt, le nickel et les alliages comportant au moins un de ces métaux, préférentiellement un métal choisi dans le groupe constitué par le fer, le cuivre, le zinc, l'étain et les alliages comportant au moins un de ces métaux, préférentiellement un métal choisi dans le groupe constitué par le laiton et le l'acier.
27. Un pneumatique comprenant une composition selon l'un quelconque des points 1 à 23.
28. Un pneumatique comprenant une couche interne comprenant une composition selon l'un quelconque des points 1 à 23.

### Exemples

La qualité de la liaison entre la composition de caoutchouc et le composant est déterminée par un test dans lequel on mesure la force nécessaire pour extraire des tronçons de fils unitaires présentant une surface métallique, de la composition de caoutchouc réticulée. A cette fin, on prépare des composites sous la forme d'éprouvette contenant d'une part des fils unitaires métalliques à titre de composant présentant une surface métallique et d'autre part un mélange élastomère comprenant la composition de caoutchouc réticulée.

### Préparation des compositions de caoutchouc

On procède pour préparer les différentes compositions de caoutchouc, de la manière suivante : on introduit dans un mélangeur interne (taux de remplissage final : environ 70% en volume), dont la température initiale de cuve est d'environ 60°C, successivement le polymère comprenant des fonctions époxyde, puis tous les autres constituants du mélange. On conduit alors un travail thermomécanique en une étape jusqu'à atteindre une température maximale de « tombée » de 150°C. On récupère le mélange ainsi obtenu, on le refroidit sur un mélangeur externe (homo-finisseur) à 30°C, en mélangeant le tout.

Les compositions préparées sont présentées dans le tableau 1. On note que la composition « T1 » ne comporte aucun composé polyphénolique spécifique et que la composition « T2 » comprend un composé phénolique comprenant un cycle aromatique substitué par deux groupes hydroxyles vicinaux.

### Préparation des éprouvettes

Les compositions de caoutchouc ainsi préparées sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 170°C pendant un temps variant de 25 min à 90 min selon la composition sous pression de 5.5 tonnes.

Les fils unitaires sont des fils en acier clair (c'est-à-dire non revêtu) ou en acier recouvert de laiton. Leur diamètre est de 1,75 mm ; l'épaisseur du revêtement en laiton de 200 nm à 1 µm.

Les éprouvettes ainsi préparées avec des compositions conformes correspondent à des composites conformes à l'invention.

### Test d'adhésion

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données selon la méthode décrite dans la norme ASTM D 2229-02 (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient la composition de caoutchouc « T1 » présentée dans le Tableau 1.

Une valeur supérieure à celle de l'éprouvette témoin, arbitrairement fixée à 100, indique un résultat amélioré, c'est-à-dire une force d'arrachement supérieure à celle de l'éprouvette témoin.

**Tableau 1**

| | ***T1*** | ***T2*** | ***C1a*** | ***C1b*** | ***C2*** | ***C3*** |
|---|---|---|---|---|---|---|
| *eNR25 (1)* | 100 | 100 | 100 | 100 | 100 | 100 |
| *Silice 160 MP (2)* | 60 | 60 | 60 | 60 | 60 | 60 |
| *Silane Octéo (3)* | 4,8 | 4,8 | 4,8 | 4,8 | 4,8 | 4,8 |
| *6PPD (4)* | 1,5 | 1,5 | 1,5 | 1,5 | 1,5 | 1,5 |
| *Diacide PBACN (5)* | 24,8 | 24,8 | 24,8 | 24,8 | 24,8 | 24,8 |
| *Imidazole BMI (6)* | 2,2 | 2,2 | 2,2 | 2,2 | 2,2 | 2,2 |
| *Acide 3,4-dihydroxyhydrocinnamique (7)* | 0 | 5 | 0 | 0 | 0 | 0 |
| *Quercétine (8)* | 0 | 0 | 3 | 6 | 0 | 0 |
| *Hydrate de Catéchine (9)* | 0 | 0 | 0 | 0 | 3 | 0 |
| *Gallate d'épigallocatéchine (10)* | 0 | 0 | 0 | 0 | 0 | 5 |

| **Résultats tests d'adhésion** | | | | | | |
|---|---|---|---|---|---|---|
| Laiton | 100 | n.m. | 141 | 282 | 381 | 570 |
| Acier | 100 | 172 | 126 | 239 | 376 | 504 |

| | | | | | | |
|---|---|---|---|---|---|---|
| Toutes les compositions sont données en pce - n.m. : non mesuré (1) Caoutchouc Naturel Epoxydé, « ENR-25 », de la société Guthrie Polymer ; (2) Silice 160 MP, « Zeosil 1165MP » de la société Rhodia ; (3) « Dynasylan Octeo », de la société Degussa ; (4) N-1,3-diméthylbutyl-N-phénylparaphénylènediamine (Santoflex 6-PPD de la société Flexsys) ; (5) Poly(acrylonitrile-co-butadiene), dicarboxy terminated, Sigma-Aldrich ref.418870, Mn=3800 g/mol ; (6) 1-benzyl-2-méthylimidazole, CAS = 13750-62-4 de la société Sigma-Aldrich ; (7) CAS = 1078-61-1 de la société Sigma-Aldrich (8) CAS = 117-39-5 de la société Sigma-Aldrich ; (9) fourni par Sigma-Aldrich ; (10) CAS = 989-51-5 de la société Sigma-Aldrich ; | | | | | | |

Le tableau 1 montre les résultats des tests d'adhésion effectués sur des éprouvettes témoins et sur des éprouvettes conformes à l'invention.

Présentant des valeurs très supérieures à 100 dans le test d'adhésion, les composites conformes à l'invention présentent une résistance à l'arrachement fortement améliorée, aussi bien dans le cas des éléments filaires en laiton qu'en acier.

L'amélioration de la performance du composite est observée en l'absence de toute étape de sulfuration.

## Revendications

1. Composition de caoutchouc à base d'au moins un élastomère comprenant des fonctions époxyde, au moins une charge renforçante, un système de réticulation comprenant un polyacide carboxylique de formule générale (I) 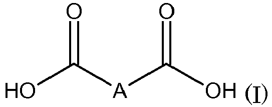 dans laquelle A représente une liaison covalente ou un groupement hydrocarboné comportant au moins 1 atome de carbone, éventuellement substitué et éventuellement interrompu par un ou plusieurs hétéroatomes et un imidazole de formule générale (II) 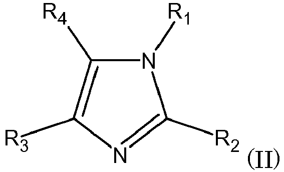 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné, ou encore R₃ et R₄ forment ensemble, avec les atomes de carbone du cycle imidazole auxquels ils se rattachent, un cycle,
et au moins un composé polyphénolique de formule générale (III) 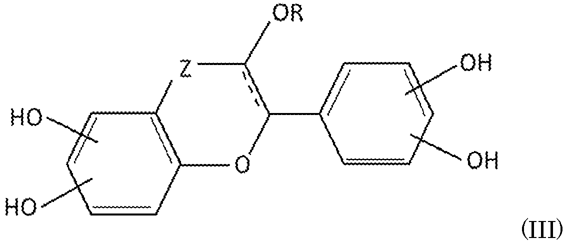 dans laquelle :
- R représente un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle, ces radicaux étant éventuellement substitués ;
- Z représente un radical divalent CH₂ ou C=O.

2. Composition selon la revendication précédente dans laquelle R représente un atome d'hydrogène, ou un groupe choisi parmi les groupes carboxyle, hydrogénocarbonyle et hydroxyle, ou un radical choisi parmi les radicaux alkyle et arylcarbonyle.

3. Composition selon l'une des revendications précédentes dans laquelle R représente un atome d'hydrogène.

4. Composition selon l'une des revendications 1 à 2 dans laquelle R représente un radical arylcarbonyle substitué par au moins deux groupes hydroxyles vicinaux.

5. Composition selon l'une des revendications précédentes dans laquelle la masse molaire dudit composé polyphénolique est inférieure à 1000 g/mol.

6. Composition selon l'une des revendications précédentes dans laquelle le taux de composé polyphénolique est compris entre 0,1 et 25 pce.

7. Composition selon l'une des revendications précédentes dans laquelle ladite composition est dépourvue de soufre moléculaire ou en contient moins de 1 pce.

8. Composition selon l'une des revendications précédentes dans laquelle ladite composition est dépourvue de sels de cobalt ou en contient moins de 1 pce.

9. Composition de caoutchouc selon l'une quelconque des revendications précédentes, dans laquelle le taux de poly-acide est compris dans un domaine allant de 0,2 à 100 pce, de préférence de 0,2 à 50 pce.

10. Composition de caoutchouc selon l'une quelconque des revendications précédente, dans laquelle :
- R1 représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R2 représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R3 et R4 représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R3 et R4 forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

11. Composition de caoutchouc selon l'une quelconque des revendications précédentes, dans laquelle R1 représente un groupement choisi parmi les groupements alkyles ayant de 2 à 12 atomes de carbone, ou aralkyles ayant de 7 à 13 atomes de carbone; groupements qui peuvent éventuellement être substitués.

12. Composition de caoutchouc selon l'une quelconque des revendications précédentes, dans laquelle R1 représente un groupement aralkyle ayant de 7 à 13 atomes de carbone éventuellement substitué et R2 représente un groupement alkyle ayant de 1 à 12 atomes de carbone.

13. Composition de caoutchouc selon l'une quelconque des revendications précédentes dans laquelle le taux de charge renforçante est comprise entre 20 et 200 pce.

14. Composite à base au moins d'un élément de renfort et d'une composition selon l'une des revendications précédentes.

15. Pneumatique comprenant une composition selon l'une des revendications 1 à 13.

## Patentansprüche

1. Kautschukzusammensetzung auf Basis von mindestens einem Elastomer mit Epoxidfunktionen, mindestens einem verstärkenden Füllstoff, einem Vernetzungssystem, umfassend eine Polycarbonsäure der allgemeinen Formel (I) 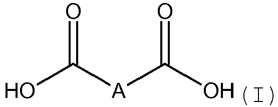 in der A für eine kovalente Bindung oder eine Kohlenwasserstoffgruppe mit mindestens 1 Kohlenstoffatom, die gegebenenfalls substituiert und gegebenenfalls durch ein oder mehrere Heteroatome unterbrochen ist, steht, und ein Imidazol der allgemeinen Formel (II) 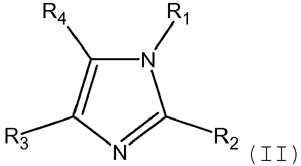 in der
- R₁ für eine Kohlenwasserstoffgruppe oder ein Wasserstoffatom steht,
- R₂ für eine Kohlenwasserstoffgruppe steht,
- R₃ und R₄ unabhängig voneinander für ein Wasserstoffatom oder eine Kohlenwasserstoffgruppe stehen oder auch R₃ und R₄ zusammen mit den Kohlenstoffatomen des Imidazolrings, an die sie gebunden sind, einen Ring bilden,
und mindestens eine Polyphenolverbindung der allgemeinen Formel (III) 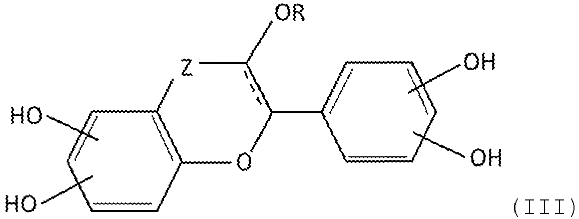 wobei:
- R für ein Wasserstoffatom oder eine aus Carboxyl-, Hydrogencarbonyl- und Hydroxylgruppen ausgewählte Gruppe oder einen aus Alkyl-, Cycloalkylalkyl-, Aryl-, Aralkyl- , Aryloxy-, Alkoxy-, Carboxylalkyl-, Carbonylalkyl-, Alkylcarbonyl-, Arylcarbonyl- und Aminoalkylresten ausgewählten Rest steht, wobei diese Reste gegebenenfalls substituiert sind;
- Z für einen zweiwertigen CH₂- oder C=O-Rest steht.

2. Zusammensetzung nach dem vorhergehenden Anspruch, wobei R für ein Wasserstoffatom oder eine aus Carboxyl-, Hydrogencarbonyl- und Hydroxylgruppen ausgewählte Gruppe oder einen aus Alkyl- und Arylcarbonylresten ausgewählten Rest steht.

3. Zusammensetzung nach einem der vorhergehenden Ansprüche, wobei R für ein Wasserstoffatom steht.

4. Zusammensetzung nach einem der Ansprüche 1 bis 2, wobei R für einen Arylcarbonylrest, der durch mindestens zwei vicinale Hydroxylgruppen substituiert ist, steht.

5. Zusammensetzung nach einem der vorhergehenden Ansprüche, wobei die Molmasse der Polyphenolverbindung kleiner als 1000 g/mol ist.

6. Zusammensetzung nach einem der vorhergehenden Ansprüche, wobei der Gehalt an Polyphenolverbindung zwischen 0,1 und 25 phe liegt.

7. Zusammensetzung nach einem der vorhergehenden Ansprüche, wobei die Zusammensetzung frei von molekularem Schwefel ist oder weniger als 1 phe davon enthält.

8. Zusammensetzung nach einem der vorhergehenden Ansprüche, wobei die Zusammensetzung frei von Cobaltsalzen ist oder weniger als 1 phe davon enthält.

9. Kautschukzusammensetzung nach einem der vorhergehenden Ansprüche, wobei der Gehalt an Polysäure in einem Bereich von 0,2 bis 100 phe, vorzugsweise von 0,2 bis 50 phe, liegt.

10. Kautschukzusammensetzung nach einem der vorhergehenden Ansprüche, wobei:
- R1 für ein Wasserstoffatom oder eine Alkylgruppe mit 1 bis 20 Kohlenstoffatomen, eine Cycloalkylgruppe mit 5 bis 24 Kohlenstoffatomen, eine Arylgruppe mit 6 bis 30 Kohlenstoffatomen oder eine Aralkylgruppe mit 7 bis 25 Kohlenstoffatomen steht; wobei die Gruppe gegebenenfalls durch ein oder mehrere Heteroatome unterbrochen und/oder substituiert sein kann,
- R2 für eine Alkylgruppe mit 1 bis 20 Kohlenstoffatomen, eine Cycloalkylgruppe mit 5 bis 24 Kohlenstoffatomen, eine Arylgruppe mit 6 bis 30 Kohlenstoffatomen oder eine Aralkylgruppe mit 7 bis 25 Kohlenstoffatomen steht; wobei die Gruppe gegebenenfalls durch ein oder mehrere Heteroatome unterbrochen und/oder substituiert sein kann,
- R3 und R4 unabhängig für gleiche oder verschiedene Gruppen stehen, die aus Wasserstoff oder Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt sind; wobei die Gruppen gegebenenfalls durch Heteroatome unterbrochen und/oder substituiert sein können, oder auch R3 und R4 zusammen mit den Kohlenstoffatomen des Imidazolrings, an die sie gebunden sind, einen Ring bilden, der aus aromatischen, heteroaromatischen oder aliphatischen Ringen mit 5 bis 12 Kohlenstoffatomen, vorzugsweise 5 oder 6 Kohlenstoffatomen, ausgewählt ist.

11. Kautschukzusammensetzung nach einem der vorhergehenden Ansprüche, wobei R1 für eine Gruppe steht, die aus Alkylgruppen mit 2 bis 12 Kohlenstoffatomen oder Aralkylgruppen mit 7 bis 13 Kohlenstoffatomen ausgewählt ist; wobei die Gruppen gegebenenfalls substituiert sein können.

12. Kautschukzusammensetzung nach einem der vorhergehenden Ansprüche, wobei R1 für eine Aralkylgruppe mit 7 bis 13 Kohlenstoffatomen, die gegebenenfalls substituiert ist, steht und R2 für eine Alkylgruppe mit 1 bis 12 Kohlenstoffatomen steht.

13. Kautschukzusammensetzung nach einem der vorhergehenden Ansprüche, wobei der Gehalt an verstärkendem Füllstoff zwischen 20 und 200 phe liegt.

14. Verbund auf Basis von mindestens einem Verstärkungselement und einer Zusammensetzung nach einem der vorhergehenden Ansprüche.

15. Reifen, umfassend eine Zusammensetzung nach einem der Ansprüche 1 bis 13.

## Claims

1. Rubber composition based on at least one elastomer comprising epoxide functions, at least one reinforcing filler, a crosslinking system comprising a polycarboxylic acid of general formula (I) 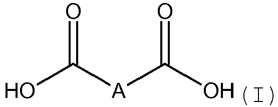 in which A represents a covalent bond or a hydrocarbon group comprising at least 1 carbon atom which is optionally substituted and optionally interrupted by one or more heteroatoms, and an imidazole of general formula (II) 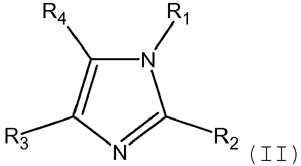 in which
- R₁ represents a hydrocarbon group or a hydrogen atom,
- R₂ represents a hydrocarbon group,
- R₃ and R₄ represent, independently of each other, a hydrogen atom or a hydrocarbon group, or else R₃ and R₄ form, together with the carbon atoms of the imidazole ring to which they are attached, a ring,
and at least one polyphenolic compound of general formula (III) 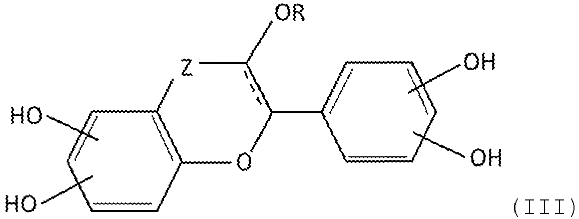 in which:
- R represents a hydrogen atom, or a group chosen from carboxyl, hydrogenocarbonyl and hydroxyl groups, or a radical chosen from alkyl, cycloalkylalkyl, aryl, aralkyl, aryloxy, alkoxy, carboxylalkyl, carbonylalkyl, alkylcarbonyl, arylcarbonyl and aminoalkyl radicals, these radicals optionally being substituted;
- Z represents a divalent CH₂ or C=O radical.

2. Composition according to the preceding claim, in which R represents a hydrogen atom, or a group chosen from carboxyl, hydrogenocarbonyl and hydroxyl groups, or a radical chosen from alkyl and arylcarbonyl radicals.

3. Composition according to either of the preceding claims, in which R represents a hydrogen atom.

4. Composition according to either of Claims 1 and 2, in which R represents an arylcarbonyl radical which is substituted by at least two vicinal hydroxyl groups.

5. Composition according to one of the preceding claims, in which the molar mass of said polyphenolic compound is less than 1000 g/mol.

6. Composition according to one of the preceding claims, in which the content of polyphenolic compound is between 0.1 and 25 phr.

7. Composition according to one of the preceding claims, in which said composition is devoid of molecular sulfur or contains less than 1 phr thereof.

8. Composition according to one of the preceding claims, in which said composition is devoid of cobalt salts or contains less than 1 phr thereof.

9. Rubber composition according to any one of the preceding claims, in which the content of polyacid is within a range extending from 0.2 to 100 phr, preferably from 0.2 to 50 phr.

10. Rubber composition according to any one of the preceding claims, in which:
- R1 represents a hydrogen atom or an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms; which group may optionally be interrupted by one or more heteroatoms and/or substituted,
- R2 represents an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms; which group may optionally be interrupted by one or more heteroatoms and/or substituted,
- R3 and R4 independently represent identical or different groups chosen from hydrogen or alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms; which groups may optionally be interrupted by heteroatoms and/or substituted, or else R3 and R4 form, together with the carbon atoms of the imidazole ring to which they are attached, a ring chosen from aromatic, heteroaromatic or aliphatic rings comprising from 5 to 12 carbon atoms, preferably 5 or 6 carbon atoms.

11. Rubber composition according to any one of the preceding claims, in which R1 represents a group chosen from alkyl groups having from 2 to 12 carbon atoms, or aralkyl groups having from 7 to 13 carbon atoms; which groups may optionally be substituted.

12. Rubber composition according to any one of the preceding claims, in which R1 represents an optionally substituted aralkyl group having from 7 to 13 carbon atoms and R2 represents an alkyl group having from 1 to 12 carbon atoms.

13. Rubber composition according to any one of the preceding claims, in which the content of reinforcing filler is between 20 and 200 phr.

14. Composite based on at least one reinforcing element and on a composition according to one of the preceding claims.

15. Tyre comprising a composition according to one of Claims 1 to 13.
